# EUROPÄISCHE PATENTSCHRIFT

(11) **EP 2 176 096 B1**
(45) Veröffentlichungstag und Bekanntmachung des Hinweises auf die Patenterteilung: **21.09.2011**
(21) Anmeldenummer: 09781415.6
(22) Anmeldetag: 03.08.2009
(51) Int. Cl.: B60R 21/26

(54) **AIRBAGMODUL FÜR EIN KRAFTFAHRZEUG**
AIRBAG MODULE FOR A MOTOR VEHICLE
MODULE D AIRBAG POUR UN VÉHICULE AUTOMOBILE

(30) Priorität: 06.08.2008 DE 102008036515; 07.11.2008 DE 102008056948
(43) Veröffentlichungstag der Anmeldung: 21.04.2010
(73) Patentinhaber: Takata-Petri AG, 63743 Aschaffenburg (DE)
(72) Erfinder: SCHREIBER, Christian, 16356 Ahrensfelde (DE); ISERMANN, Patrick, 14197 Berlin (DE); PURUSHOTHAMAN, Paarthiban, 10967 Berlin (DE)
(74) Vertreter: Baumgärtel, Gunnar
(86) Internationale Anmeldenummer: PCT/EP2009/060022
(87) Internationale Veröffentlichungsnummer: WO 2010/015595

(56) Entgegenhaltungen:
- EP-A2- 0 913 299
- WO-A1-2007/141335
- DE-A1- 19 726 296
- DE-A1-102006 010 953
- DE-A1-102007 037 604
- DE-B3-102008 010 740
- US-A- 5 669 631
- US-A- 6 076 468

## Beschreibung

Die Erfindung betrifft ein Airbagmodul für ein Kraftfahrzeug gemäß dem Oberbegriff des Anspruchs 1 sowie ein Verfahren zur Herstellung eines Airbagmoduls.

Ein derartiges Airbagmodul für ein Kraftfahrzeug umfasst einen Gassack, der durch Einleiten von Gas in den Gassack zum Schutz eines Insassen aufblasbar ist, ein öffenbares Reservoir zum Aufnehmen eines Kühlmittels, wobei das Reservoir in einen ersten und einen damit verbundenen zweiten Abschnitt unterteilt ist, zumindest eine im zweiten Abschnitt angeordnete Ausströmöffnung des Reservoirs, durch die hindurch Kühlmittel zum Kühlen in den Gassack eingeleiteter Gase in den Gassack gelangen kann, und ein Verschlusselement zum Verschließen der Ausströmöffnung, so dass kein Kühlmittel aus dem Reservoir austreten kann. Ein solches Airbagmodul ist aus der DE 10 2006 010953 A1 bekannt.

Durch Kühlen der in den Gassack eingeleiteten bzw. der im Gassack befindlichen Gase kann der im Gassack herrschende Druck definiert zu einem beliebigen Zeitpunkt (insbesondere unabhängig vom Zeitpunkt der Aktivierung des Gasgenerators) herab gesetzt werden. Hierdurch kann der Gassack an spezifische Crashverhältnisse (Kollisionsverhältnisse) bzw. an den zu schützenden Insassen angepasst werden, insbesondere an dessen Größe und Gewicht sowie an dessen Position bezüglich des Gassackes (z.B. out-of-position, d.h., außerhalb der normalen Position beim Fahren).

Der Erfindung liegt das Problem zugrunde, ein Airbagmodul der eingangs genannten Art zu verbessern.

Dieses Problem wird durch ein Airbagmodul mit den Merkmalen des Anspruchs 1 gelöst. Danach ist vorgesehen, dass das (insbesondere bewegbare) Verschlusselement in einer Anfangsposition das Reservoir in die beiden Abschnitte unterteilt, und dass das Kühlmittel im ersten Abschnitt angeordnet ist, wobei das Verschlusselement dazu eingerichtet und vorgesehen sein kann, den ersten Abschnitt des Reservoirs gegenüber dem zweiten Abschnitt des Reservoirs abzudichten. Auf diese Weise verschließt das Verschlusselement die mindestens eine Ausströmöffnung obwohl es insbesondere beabstandet zu jener mindestens einen Ausströmöffnung angeordnet ist.

Oder anders gesagt, das (insbesondere bewegbare) Verschlusselement ist an der der mindestens einen Austrittsöffnung zugewandten Seite des Reservoirs angeordnet und kann insbesondere an dieser (Innen)seite entlang an der Ausströmöffnung vorbeibewegt werden, um die Ausströmöffnung zum Freisetzen des Kühlmittels zu öffnen.

Des Weiteren wird das erfindungsgemäße Problem durch ein Verfahren zur Herstellung eines Airbagmoduls mit den Merkmalen des Anspruchs 11 gelöst.

Vorteilhafte Ausgestaltungen der Erfindung sind in den Unteransprüchen sowie den Figuren und den diesbezüglichen Erläuterungen beschrieben. Dabei bedeutet eine längs erstreckte Gestalt des Reservoirs, dass das Reservoir entlang einer Erstreckungsrichtung eine größere Ausdehnung aufweist als entlang quer zur Erstreckungsrichtung verlaufender Richtungen. Dabei kann das Reservoir entlang der Erstreckungsrichtung eine Krümmung aufweisen, also etwa bogenförmig oder ringförmig ausgestaltet sein.

Besonders bevorzugt ist das Verschlusselement dazu eingerichtet und vorgesehen, zum Öffnen der Ausströmöffnung im Reservoir bewegt zu werden, wobei das Verschlusselement auch im geöffneten Zustand der Ausströmöffnung zumindest abschnittsweise im Reservoir angeordnet ist.

Um die mindestens eine Ausströmöffnung flüssigkeitsleitend mit der im ersten Abschnitt des Reservoirs gespeicherten Kühlflüssigkeit zu verbinden, ist das Verschlusselement vorzugsweise dazu ausgebildet, entlang einer Bewegungsrichtung aus einer Anfangsposition, in der das Verschlusselement das Reservoir in den ersten und den zweiten Abschnitt unterteilt, in eine Endposition bewegt zu werden, und zwar insbesondere vom ersten Abschnitt weg und an der mindestens einen Ausströmöffnung vorbei, so dass das Kühlmittel aus dem ersten Abschnitt in den zweiten Abschnitt des Reservoirs gelangen kann und von dort durch die mindestens eine Ausströmöffnung hindurch aus dem Reservoir austreten kann. D.h., das Verschlusselement durchquert bei dieser Bewegung insbesondere den zweiten Abschnitt des Reservoirs und ist also in seiner Endposition im zweiten Abschnitt des Reservoirs angeordnet.

Bevorzugt weist das Reservoir eine entlang der Bewegungsrichtung längs erstreckte Wandung auf, die quer zur Bewegungsrichtung umläuft und das Kühlmittel umgibt, wobei jene Wandung insbesondere zumindest abschnittsweise hohlzylinderförmig ausgebildet sein kann.

Die Wandung weist insbesondere eine dem Verschlusselement (und dem Kühlmittel) zugewandte Innenseite auf, die quer zur Bewegungsrichtung entsprechend umläuft. An dieser Innenseite liegt das Verschlusselement an und gleitet bei seiner Bewegung in die Endposition daran entlang.

Weiterhin weist das Reservoir bevorzugt eine Stirnseite auf, die dem Verschlusselement entlang der Bewegungsrichtung gegenüberliegt, wobei jene Stirnseite einen Anschlag für das Verschlusselement bildet, der die Bewegung des Verschlusselementes in die Endposition begrenzt. Dabei weist die Stirnseite insbesondere eine mittige Durchgangsöffnung auf, in die das Verschlusselement in der Endposition eingreift.

Vorzugsweise ist die mindestens eine Ausströmöffnung an der besagten Wandung ausgebildet, so dass das Verschlusselement auf einfache Weise an der mindestens einen Ausströmöffnung vorbeigeführt werden kann. Aufgrund der vorstehenden Anordnung der mindestens einen Ausströmöffnung wird das Kühlmittel quer zur Bewegungsrichtung aus dem Reservoir ausgestoßen.

In einer Variante der Erfindung ist das Verschlusselement kugelförmig ausgebildet, wobei die Wandung bzw. die Innenseite der Wandung im Querschnitt eine entsprechende kreisförmige Kontur aufweist.

Um das Verschlusselement in seiner Anfangsposition zu arretieren, ist das Verschlusselement vorzugsweise durch zumindest eine am Reservoir umlaufende Sicke in Form einer an der Innenseite umlaufenden Erhebung daran gehindert, in den zweiten Abschnitt bewegt zu werden. Hierzu ist jene Sicke entlang der Bewegungsrichtung zwischen dem in der Anfangsposition befindlichen Verschlusselement und der mindestens einen Ausströmöffnung angeordnet. Die Sicke stellt eine Verengung des Reservoirs dar, an der das Verschlusselement nur vorbeibewegt werden kann, wenn eine gewisse, vordefinierbare Mindestkraft auf das Verschlusselement entlang der Bewegungsrichtung einwirkt. Vorzugsweise sind zwei derartige Sicken vorgesehen, die entlang der Bewegungsrichtung zu beiden Seiten des in der Anfangsposition befindlichen Verschlusselementes angeordnet sind.

Für die Gewährleistung der Abdichtung des ersten Abschnittes des Reservoirs gegenüber dem zweiten Abschnitt und damit das Verschlusselement an der einen Sicke vorbeibewegt werden kann, ist das Verschlusselement in einer Variante der Erfindung (elastisch) deformierbar ausgebildet. Alternativ dazu ist in einer weiteren Variante der Erfindung vorgesehen, dass das Reservoir bzw. die Wandung deformierbar (insbesondere elastisch) ausgebildet ist, wohingegen das Verschlusselement vorzugsweise weniger deformierbar bzw. starr ausgebildet ist.

Zum Bewegen des Verschlusselementes aus der Anfangsposition in die Endposition ist bevorzugt eine Bewegungserzeugungsvorrichtung vorgesehen, die dazu ausgebildet ist, das Kühlmittel mit einem Druck zu beaufschlagen, so dass das Kühlmittel das Verschlusselement aus der Anfangsposition in die Endposition drückt. Des Weiteren kann die Bewegungserzeugungsvorrichtung dazu eingerichtet und vorgesehen sein, im ersten Abschnitt des Reservoirs einen Druck bereitzustellen, so dass sich das Reservoir im Querschnitt aufweitet. Hierdurch kann bei einem starren Verschlusselement die Arretierung des Verschlusselementes in der Anfangsposition aufgehoben werden und das Verschlusselement in seine Endposition bewegt werden. Bevorzugt wird die Bewegungserzeugungsvorrichtung durch einen Gasgenerator gebildet, der insbesondere mit einem freien Ende des ersten Abschnitts des Reservoirs verklemmt ist.

Vorzugsweise ist das Reservoir längs erstreckt ausgebildet, insbesondere entlang der Bewegungsrichtung, wobei das Reservoir bevorzugt rohrförmig ausgebildet ist. Hierbei kann das Reservoir durchaus gekrümmt ausgebildet sein. Die Bewegungsrichtung folgt dann jener Krümmung bzw. den Krümmungen des Reservoirs. So kann das Reservoir beispielsweise offen ringförmig ausgebildet sein, insbesondere bei einem Reservoir, das an einem Halteelement (z.B. Diffusor) für einen Gassack angeordnet bzw. ausgebildet ist. Insbesondere besteht bei einem längs erstreckten Reservoir die Möglichkeit, dieses aus einem Modulgehäuse des Airbagmoduls herauszuführen, um z.B. eine leicht zugängliche Schnittstelle zwischen der Bewegungserzeugungsvorrichtung und einer fahrzeugseitigen Elektronik vorzusehen.

Der zweite Abschnitt des Reservoirs ist vorzugsweise so angeordnet, dass aus der mindestens einen Ausströmöffnung austretendes Kühlmittel durch eine Einströmöffnung des Gassackes in den Gassack einströmen kann, insbesondere kann der zweite Abschnitt oder auch das gesamte Reservoir in einem durch den Gassack definierten Innenraum des Gassackes angeordnet sein.

In einer Variante der Erfindung ist vorgesehen, dass das Reservoir an einem Halteelement des Airbagmoduls angeordnet ist, das zum Befestigen des Gassackes am Airbagmodul dient, wobei das Reservoir insbesondere in das Halteelement integriert ist, und zwar vorzugsweise indem es als separates Teil an dem Halteelement bzw. einem Teil des Halteelementes lösbar (z.B. Rast- oder Schraubverbindung) bzw. unlösbar (z.B. Schweißverbindung) festgelegt ist. In einer Ausführungsform ist das Haltelement als ein ringförmig umlaufender Klemmring ausgebildet, der zum Festklemmen des Gassackes an einem Teil des Airbagmoduls (z.B. einem Modulgehäuse oder einem Gasgenerator) eingerichtet und vorgesehen ist. Das besagte Halteelement kann in einer anderen Ausführungsform auch durch einen Diffusor zum Verteilen durch einen Gasgenerator frei gesetzter Gase ausgebildet sein. Ein solcher Diffusor weist vorzugsweise einen umlaufenden Flansch auf, an dem das Reservoir vorzugsweise als separates Teil befestigt ist. Das Reservoir kann natürlich auch einen integralen Bestandteil darstellen, der an dem Flansch bzw. dem Halteelement einstückig angeformt sein kann.

Insbesondere kann das Reservoir eine Krümmung aufweisen derart, dass das Reservoir mit einem Abschnitt, der insbesondere die Bewegungserzeugungsvorrichtung aufweist, aus dem Gassack herausstehen, wobei der besagte Abschnitt insbesondere quer zum Flansch verlaufen kann. Hierbei kann die Bewegungserzeugungsvorrichtung zumindest abschnittsweise (oder vollständig) aus dem Gassack herausragen.

In einer weiteren Ausführungsform der Erfindung ist ein weiteres, zusätzliches Verschlussmittel vorgesehen, das entlang einer Bewegungsrichtung aus einer Anfangsposition, in der das weitere Verschlusselement so angeordnet ist, dass das Kühlmittel entlang der Bewegungsrichtung zwischen den beiden Verschlussmitteln eingeschlossen ist, in eine Endposition bewegbar ist, wobei das weitere Verschlussmittel das Kühlmittel und das eine Verschlussmittel bei seiner Bewegung in seine Endposition mitnimmt, so dass das eine Verschlussmittel insbesondere einerseits an den Ausströmöffnungen vorbeibewegt wird (Bewegung des einen Verschlussmittels aus der Anfangsposition des einen Verschlussmittels in die Endposition des einen Verschlussmittels) und andererseits das Kühlmittel insbesondere durch die Ausströmöffnungen hindurch in den Innenraum eines Gassackes freigesetzt werden kann.

Das weitere Verschlussmittel kann wie das eine Verschlussmittel beschaffen sein und insbesondere in der gleichen Weise arretiert werden.

Hierbei ist bevorzugt die Bewegungserzeugungsvorrichtung dazu eingerichtet und vorgesehen, das Kühlmittel über das weitere Verschlussmittel mit einem Druck zu beaufschlagen, so dass das weitere Verschlussmittel das Kühlmittel aus dem Reservoir herausdrückt und dabei das eine Verschlusselement aus seiner Anfangsposition in seine Endposition befördert.

Weiterhin wird das erfindungsgemäße Problem durch ein Verfahren zur Herstellung eines Airbagmoduls, insbesondere nach einem der Ansprüche 1 bis 10, gelöst. Das erfindungsgemäße Verfahren umfasst die Schritte: Bereitstellen eines entlang einer Erstreckungsrichtung längs erstreckten Hohlkörpers bzw. Rohres, der bzw. das entlang der Erstreckungsrichtung in einen ersten und einen zweiten Abschnitt unterteilt ist, Ausbilden zumindest einer Ausströmöffnung lediglich am zweiten Abschnitt, und Einführen eines Verschlusselementes in den Hohlkörper bzw. das Rohr derart, dass das Verschlusselement in dieser Anfangsposition das Rohr in den ersten und den zweiten Abschnitt unterteilt, wobei in den ersten Abschnitt ein Kühlmittel eingefüllt wird, insbesondere durch eine Öffnung des ersten Abschnittes, die durch das freie Ende des ersten Abschnittes berandet wird.

Bevorzugt wird als Verschlusselement eine (elastisch) deformierbares Element (z.B. in Form einer Kugel) in das Rohr eingeführt, die den ersten Abschnitt gegenüber dem zweiten Abschnitt abdichtet, so dass im ersten Abschnitt gespeichertes Kühlmittel nicht aus der mindestens einen, am zweiten Abschnitt ausgebildeten Ausströmöffnung austreten kann, oder es wird ein starres Element als Verschlusselement vorgesehen und das Reservoir deformierbar bzw. elastisch deformierbar ausgebildet. Somit wird beim Beaufschlagen des Kühlmittels mit einem Druck entweder der Anpressdruck des elastisch deformierbaren Verschlusselementes an die Wandung des Reservoirs überwunden, so dass es aus der Anfangsposition in die Endposition bewegt werden kann, oder das Reservoir wird durch den bereitgestellten Druck im Querschnitt aufgeweitet, so dass ein starres (weniger deformierbares) Verschlusselement aus der Anfangsposition in die Endposition gedrückt werden kann.

Zum Festlegen der Bewegungserzeugungsvorrichtung wird insbesondere ein freies Ende des ersten Abschnittes des Rohres in einer quer zur Erstreckungsrichtung des Rohres verlaufenden Querschnittsebene im Querschnitt aufgeweitet.

Um des Weiteren zu verhindern, dass das Verschlusselement entlang der Erstreckungsrichtung des Rohres (Bewegungsrichtung) aus dem Rohr (dem zweiten Abschnitt) herausgedrückt werden kann, wird ein freies Ende des zweiten Abschnittes, das entlang der Erstreckungsrichtung dem freien Ende des ersten Abschnittes gegenüberliegt, im Querschnitt verengt.

In einer Ausführungsform des erfindungsgemäßen Verfahrens ist vorgesehen, dass im ersten Abschnitt ein weiteres Verschlussmittel angeordnet wird, insbesondere durch eine Öffnung des ersten Abschnittes hindurch, die durch das freie Ende des ersten Abschnittes berandet wird, wobei die beiden Verschlussmittel das Kühlmittel entlang der Bewegungsrichtung einschließen. Somit dient das weitere Verschlussmittel als ein durch die Bewegungserzeugungsvorrichtung mit Druck beaufschlagbarer Kolben, der das Kühlmittel entsprechend aus dem Reservoir herausdrückt und dabei das entlang der Bewegungsrichtung gegenüber liegende eine Verschlussmittel so aus dessen Anfangsposition in dessen Endposition drückt (über die Kühlflüssigkeit als Kraftmittler), dass das eine Verschlussmittel an den Ausströmöffnungen vorbeibewegt wird und daher jene Ausströmöffnungen zum Ausströmen des Kühlmittels frei gibt.

Die besagte Bewegungserzeugungsvorrichtung wird vorzugsweise durch die Öffnung des ersten Abschnittes hindurch im ersten Abschnitt des Rohres angeordnet (und insbesondere hiernach im Rohr festgelegt), wobei bevorzugt das freie Ende des ersten Abschnittes, das die besagte Öffnung des ersten Abschnittes des Reservoirs begrenzt, zum Befestigen der Bewegungserzeugungsvorrichtung im Reservoir mit der Bewegungserzeugungsvorrichtung verklemmt wird, so dass jenes freie Ende des ersten Abschnittes des Reservoirs die Bewegungserzeugungsvorrichtung eng umgreift und insbesondere hintergreift, so dass die Bewegungserzeugungsvorrichtung entgegen der Bewegungsrichtung des Verschlusselementes nicht ohne Weiteres aus dem Reservoir herausgezogen werden kann.

Weitere Merkmale und Vorteile der Erfindung sollen anhand der nachfolgenden Figurenbeschreibungen von Ausführungsbeispielen verdeutlicht werden. Es zeigen:
- Fig. 1: eine schematische Schnittdarstellung eines Reservoirs eines erfindungsgemäßen Airbagmoduls, das zum Speichern eines Kühlmittels dient, welches in den Gassack freigesetzt werden kann, um den im Gassack herrschenden Druck herabzusetzen;
- Fig. 2: eine schematische Schnittdarstellung eines Details des in der Fig. 1 gezeigten Reservoirs;
- Fig. 3: das in der Fig. 1 gezeigte Reservoir mit einer aktivierten Bewegungserzeugungsvorrichtung zum Beaufschlagen des Kühlmittels mit einem Gas;
- Fig. 4: eine Abwandlung des in der Figur 1 gezeigten Reservoirs, mit einem Verschlusselement in Form eines Zylinders;
- Fig. 5: eine Abwandlung des in der Figur 1 gezeigten Reservoirs, mit einem Verschlusselement in Form eines Ellipsoids;
- Fig. 6: eine Ausführungsform eines erfindungsgemäßen Airbagmoduls in Form eines Fahrerairbagmoduls, bei dem das Reservoir umlaufend ausgebildet ist;
- Fig. 7: eine Abwandlung des in der Figur 6 gezeigten Airbagmoduls,
- Fig. 8: eine weitere Ausführungsform eines erfindungsgemäßen Airbagmoduls in Form eines Beifahrerairbagmoduls;
- Fig. 9: ein Detail der Figur 8;
- Fig. 10-17: eine Abfolge schematischer Schnittdarstellung eines Reservoirs eines erfindungsgemäßen Airbagmoduls bei der Herstellung des Reservoirs/Airbagmoduls;
- Fig. 18: eine Abwandlung des in der Figur 1 gezeigten Reservoirs eines erfindungsgemäßen Airbagmoduls; und
- Fig. 19: eine Abwandlung des in der Figur 6 gezeigten Reservoirs.

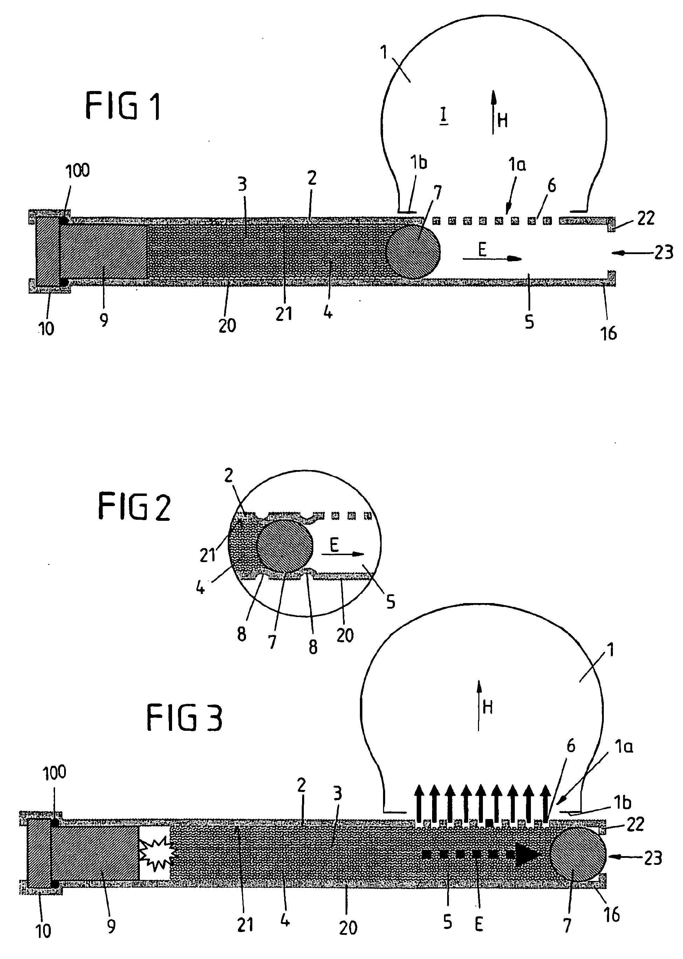

Figur 1 zeigt eine schematische Schnittdarstellung eines Reservoirs 2 eines erfindungsgemäßen Airbagmoduls, das zum Speichern eines Kühlmittels 3 dient, das durch eine Mehrzahl von Ausströmöffnungen 6, die an einer längs erstreckten, umlaufenden Wandung 20 des Reservoirs 2 ausgebildet sind, in einen durch einen Gassack 1 umgebenen Innenraum I freigesetzt werden kann, um darin befindliche Gase, die zum Aufblasen des Gassackes 1 dienen, zu kühlen. Hierdurch wird nach bekannten Gesetzen der Physik der in dem Gassack 1 herrschende Druck herabgesetzt. Hierbei können die besagten Ausströmöffnungen 6 geeignet bezüglich einer Einströmöffnung 1a des Gassacks 1 angeordnet sein oder aber direkt im Innenraum I des Gassackes 1 angeordnet sein. Des Weiteren besteht die Möglichkeit, das gesamte Reservoir 2 in dem besagten Innenraum I des Gassackes 1 anzuordnen.

Im Reservoir 2 ist eine Bewegungserzeugungsvorrichtung 9 in Form eines Gasgenerators angeordnet, die dazu ausgebildet ist, das in dem Reservoir 2 befindliche Kühlmittel 3 mit einem Druck zu beaufschlagen, so dass dieses durch die besagten Ausströmöffnungen 6 in den Innenraum I des Gassackes 1 freigesetzt wird. Dabei kann die Bewegungserzeugungsvorrichtung 9 zu einem beliebigen Zeitpunkt aktiviert werden, insbesondere unabhängig von einem Zeitpunkt der Aktivierung eines Gasgenerators, mit dem das zum Aufblasen des Gassackes 1 benötigte Gas bereitgestellt wird. Insbesondere kann das im Reservoir 2 gespeicherte Kühlmittel 3 (z.B. Kühlflüssigkeit, insbesondere Wasser) während oder nach dem Aufblasen des Gassackes 1 in den Innenraum I des Gassackes 1 freigesetzt und in Kontakt mit dem Gas gebracht werden.

Vorzugsweise ist eine Steuerelektronik zum Ansteuern bzw. Auslösen der Bewegungserzeugungsvorrichtung 9 vorgesehen, wobei jene Steuerelektronik den Zeitpunkt des Auslösens der Bewegungserzeugungsvorrichtung 9 (bzw. den Zeitpunkt des Freisetzens des Kühlmittels 3) in Abhängigkeit von zumindest einem Parameter berechnet, der mittels mindestens eines Sensors, der in oder an einem Kraftfahrzeug anordenbar ist, erfasst werden kann. Bei einem derartigen Parameter kann es sich insbesondere um eine Verzögerung des Kraftfahrzeuges handeln, die Größe des zu schützenden Insassen bzw. dessen Masse, sowie dessen Position bezüglich des Gassackes. Hierdurch kann der Gassack 1 insbesondere an einen sogenannten "out-of-position"-Fall angepasst werden, bei dem der Insasse, insbesondere mit seinem Kopf, zu nahe am Gassack positioniert ist und daher ein entsprechendes Verletzungsrisiko besteht.

Damit das Kühlmittel 3 nicht vor dem Aktivieren der Bewegungserzeugungsvorrichtung 9 durch die Ausströmöffnungen 6 des Reservoirs 2 aus dem Reservoir 2 austreten kann, ist ein Verschlusselement 7 vorgesehen, das beabstandet zu den Ausströmöffnungen 6 im Reservoir 2 angeordnet ist und dabei das Reservoir 2 in einem ersten Abschnitt 4 und einen zweiten Abschnitt 5 unterteilt, derart, dass im ersten Abschnitt 4 befindliches Kühlmittel 3 nicht am Verschlusselement 7 vorbei in den zweiten Abschnitt 5 gelangen kann, an dem die Ausströmöffnungen 6 ausgebildet sind. Das Verschlusselement 7 ist somit entlang des Reservoirs 2 zwischen Kühlmittel 3 und den Ausströmöffnungen 6 angeordnet (Anfangsposition). Um die Abdichtung zwischen dem ersten Abschnitt 4 und dem zweiten Abschnitt 5 zu gewährleisten, ist der Außendurchmesser des Verschlusselementes 7 im Vergleich zum Innendurchmesser der Wandung 20 mit einem Übermaß versehen. Das heißt, dass das Verschlusselement 7 zur Unterbringung im Reservoir 2 elastisch deformiert werden muss, im montierten Zustand also mit einem bestimmten Anpressdruck an der Innenseite 21 der Wandung 20 anliegt. Der Anpressdruck wird dabei durch die Größe des Übermaßes bestimmt. Aus der Anfangsposition kann das Verschlusselement 7 entlang einer Bewegungsrichtung E, die entlang der Erstreckungsrichtung des Reservoirs 2 verläuft, herausbewegt werden, indem das Kühlmittel 3, das im ersten Abschnitt 1 des Reservoirs 2 gespeichert ist, mittels der Bewegungserzeugungsvorrichtung 9 mit einem Druck beaufschlagt wird.

Hierzu ist die Bewegungserzeugungsvorrichtung 9 an einem freien Ende 10 des ersten Abschnitts 4 des Reservoirs 2 angeordnet, das dem Verschlusselement 7 entlang der Bewegungsrichtung E gegenüber liegt. Wird nun das im ersten Abschnitt 4 des Reservoirs 2 gespeicherte Kühlmittel 3 mittels der Bewegungserzeugungsvorrichtung 9 mit einem Druck beaufschlagt, so wird das besagte Verschlusselement 7 ebenfalls über das Kühlmittel 3 mit jenem Druck beaufschlagt und bewegt sich daher entlang der Bewegungsrichtung E von der Bewegungserzeugungsvorrichtung 9 weg in Richtung auf den zweiten Abschnitt 5 des Reservoirs 2, und zwar derart, dass es im Reservoir 2 an den Ausströmöffnungen 6 vorbeigeleitet und dabei den zweiten Abschnitt 5 des Reservoirs 2 durchquert. Eine dem freien Ende 10 gegenüberliegende Stirnseite 22 des Reservoirs an einem freien Ende 16 des zweiten Abschnitts 5 des Reservoirs 2 bildet dabei einen Anschlag für das Verschlusselement 7, der die Bewegung des Verschlusselementes 7 entlang der Bewegungsrichtung E in die Endposition begrenzt. Sobald also das Verschlusselement 7 an der besagten Stirnseite 22 des Reservoirs 2 anschlägt, befindet es sich in seiner Endposition, in der es vollständig an den Ausströmöffnungen 6 entlang der Bewegungsrichtung E vorbeibewegt wurde. Nunmehr kann das Kühlmittel 3 aus dem ersten Abschnitt 4 infolge des auf das Kühlmittel 3 wirkenden Druckes in den zweiten Abschnitt 5 des Reservoirs 2 gelangen und von dort durch die Ausströmöffnungen 6 in den Innenraum I des Gassackes 1 freigesetzt werden. Das Verschlusselement 7 ist somit stets innerhalb des Reservoirs 2 angeordnet und verlässt dieses nicht. Allerdings kann an der Stirnseite 22 eine Durchgangsöffnung 23 vorgesehen sein, in die das Verschlusselement 7 in seine Endposition herein stehen kann. Diese Durchgangsöffnung 23 kann herstellungsbedingt vorgesehen sein (siehe unten).

Zum Arretieren des Verschlusselementes 7 in seiner Anfangsposition derart, dass es nicht unbeabsichtigt aus dieser Anfangsposition herausbewegt werden kann, könnnen zusätzlich zu der vorher beschriebenen Festlegung durch die elastische Deformation des Verschlusselementes 7 zwei quer zur Bewegungsrichtung E umlaufende Sicken 8 vorgesehen sein, die von einer dem Verschlusselement 7 zugewandten Innenseite 21 der Wandung 20 in das Reservoir 2 abstehen und entlang der Bewegungsrichtung E zu beiden Seiten des Verschlusselementes 7 angeordnet sind, so dass beidseitig des Verschlusselementes 7 der Querschnitt des Reservoirs 2 in einer senkrecht zur Bewegungsrichtung E orientierten Ebene verengt ist und daher das Verschlusselement 7 entlang der Bewegungsrichtung E zwischen diesen beiden Sicken 8 in der Anfangsposition gehalten wird. Es muss daher eine gewisse vordefinierbare Mindestkraft auf das Verschlusselement 7 einwirken, um es aus dieser Anfangsposition heraus entlang der Bewegungsrichtung E in seine Endposition zu bewegen. Hierbei kann das Verschlusselement 7 deformierbar bzw. elastisch deformierbar ausgebildet sein oder es handelt sich bei dem Verschlusselement 7 um ein starres Verschlusselement, z. B. um eine Stahlkugel, wobei in einem solchen Fall das Reservoir 2 bzw. die Wandung 20 selbst deformierbar bzw. elastisch deformierbar ausgebildet ist, so dass das Verschlusselement 7 an der entlang der Bewegungsrichtung E zwischen dem Verschlusselement 7 und den Ausströmöffnungen 6 angeordneten Sicke 8 vorbeigezwängt werden kann, wenn die Bewegungserzeugungsvorrichtung 9 das Kühlmittel 3 mit einem Druck beaufschlägt, um das Verschlusselement 7 entlang der Bewegungsrichtung E in seine Endposition zu verschieben (vgl. Figur 3).

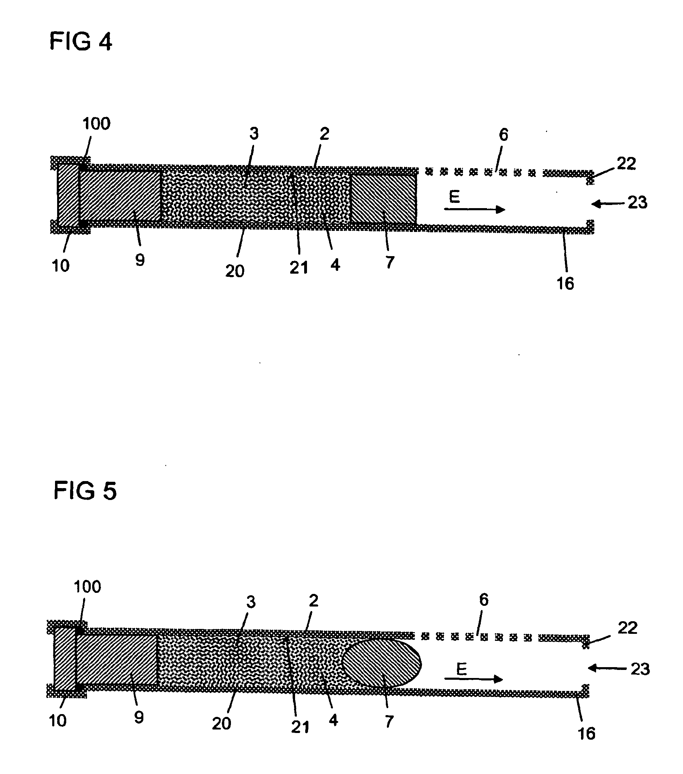

Figur 4 zeigt anhand einer schematischen Schnittdarstellung eine Abwandlung des in der Figur 1 gezeigten Reservoirs 2, bei dem im Unterschied zur Figur 1 das Verschlusselement 7 nicht kugelförmig sondern in Form eines Zylinders ausgebildet ist, vorzugsweise in Form eines Kreiszylinders.

Figur 5 zeigt in einer schematischen Querschnittsansicht eine Abwandlung des in der Figur 1 gezeigten Reservoirs 2, bei der im Unterschied zur Figur 1 das Verschlusselement 7 nicht kugelförmig sondern in Form einer abgeflachten Kugel ausgebildet ist, insbesondere in Form eines Ellipsoids.

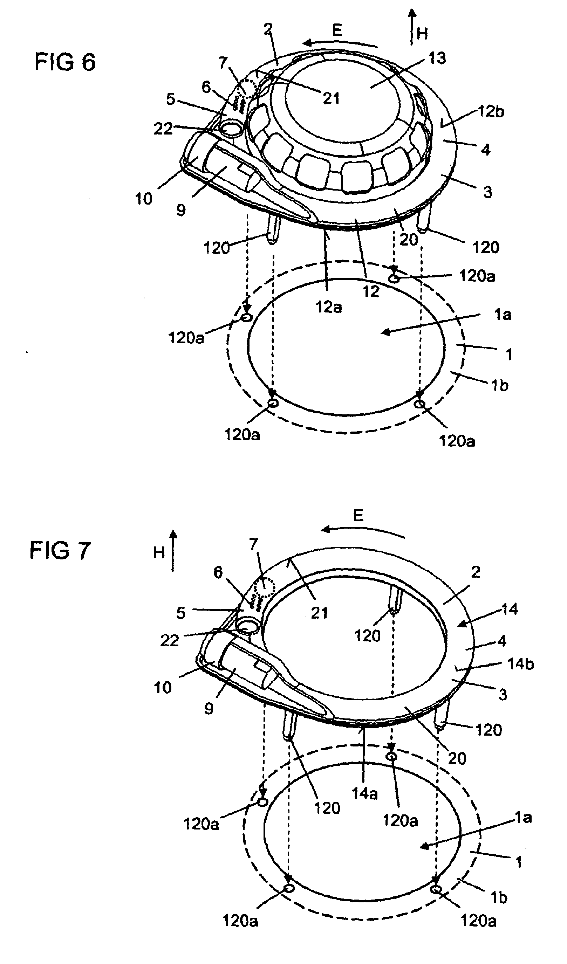

Figur 6 zeigt einen Diffusor 13 eines erfindungsgemäßen Airbagmoduls mit einem Ausschnitt eines Gassackes 1 in einer Explosionsansicht, wobei jener Diffusor 13 kappenförmig ausgebildet ist und zum Festlegen an einem Modulgehäuse eines Airbagmoduls einen ringförmig umlaufenden Flansch 12 aufweist, von dem Bolzen 120 abstehen, die dazu eingerichtet und vorgesehen sind, Durchgangsöffnungen eines Modulgehäuses oder eines sonstigen Teils eines Airbagmoduls zur Befestigung des Diffusors 13 an jenem Airbagmodul zu durchgreifen. Vorzugsweise stehen jene Bolzen 120 entgegen einer Hauptentfaltungsrichtung H des Gassackes 1 ab, entlang der sich der Gassack 1 beim Aufblasen in Richtung auf einen zu schützenden Insassen hin entfaltet.

Dabei liegt der Flansch 12 vom Innenraum I des Gassackes 1 her mit einer dem Gassack zugewandten Unterseite 12a auf einem die Einströmöffnung 1a des Gassackes 1 berandenen Randbereich 1b auf, so dass jener Randbereich 1b der Einströmöffnung 1a des Gassackes 1 beim Befestigen des Diffusors 13 am Airbagmodul, insbesondere an einem Modulgehäuse des Airbagmoduls zwischen dem Flansch 12 und jenem Teil des Airbagmoduls festgeklemmt wird. Der Randbereich 1b der Einströmöffnung 1 a des Gassackes weist dabei Durchgangsöffnungen 120a auf, die von je einem Bolzen 120 durchgriffen werden.

An dem Flansch 12 ist ein Reservoir 2 nach Art der Figur 1 angeordnet, das an einer dem Randbereich 1b des Gassackes 1 abgewandten Oberseite 12b des Flansches 12 des Diffusors 13 offen ringförmig umläuft, so dass die an dem freien Ende 10 des ersten Abschnittes 4 des Reservoirs 2 vorgesehene Bewegungserzeugungsvorrichtung 9 benachbart zum freien Ende 16 des zweiten Abschnitts 5 des Reservoirs 2 angeordnet ist, an dem die besagte Stirnseite 22 mit optionaler Durchgangsöffnung 23 ausgebildet ist. Die Ausströmöffnungen 6 des Reservoirs 2 sind dabei derart an der Wandung 20 des Reservoirs 2 angeordnet, dass sie dem Randbereich 1b der Einströmöffnung 1a des Gassackes 1 abgewandt bzw. dem Innenraum I des Gassackes 1 zugewandt sind, so dass das aus dem Reservoir 2 durch die Ausströmöffnungen 6 freigesetzte Kühlmittel 3 auf kürzestem Wege in den Innenraum I des Gassackes 1 freigesetzt werden kann. Insbesondere ist das Reservoir 2 gemäß Figur 6 als separates Bauteil an dem Flansch 12 lösbar (z.B. Rast- oder Schraubverbindung) bzw. unlösbar (z.B. Niet- oder Schweißverbindung) festgelegt.

Es ist natürlich auch möglich, das Reservoir 2 einstückig an den besagten Flansch 12 anzuformen, wobei insbesondere die Wandung 20 bzw. das Reservoir 2 selbst den besagten Flansch 12 ausbilden kann. In diesem Fall sind die Bolzen 120 direkt an der Wandung 20 bzw. dem Reservoir 2 festgelegt.

Figur 7 zeigt anhand einer schematischen, perspektivischen Ansicht eine Abwandlung des in der Figur 6 gezeigten Reservoirs 2, wobei jenes Reservoir 2 im Unterschied zur Figur 6 nicht an einem Flansch 12 eines Diffusors 13 ausgebildet ist, sondern an einem ringförmig umlaufenden Klemmelement 14 für den Gassack 1, von dem die besagten Bolzen 120 zum Festlegen des Klemmelementes an einem Airbagmodul, insbesondere einem Airbagmodulgehäuse, entgegen der besagten Hauptentfaltungsrichtung H abstehen. Dabei dient das Klemmelement 14 dazu, den besagten Randbereich 1b des Gassackes 1, der die Einströmöffnung 1a des Gassackes 1 berandet und umläuft, an einem Teil des Airbagmoduls, insbesondere an einem Airbagmodulgehäuse festzuklemmen. Hierbei drückt das Klemmelement 14 wie zuvor der Flansch 12 gemäß Figur 6 vom Innenraum I des Gassackes 1 her gegen den Randbereich 1b der Einströmöffnung 1a, und zwar gegen eine dem Innenraum I zugewandten Innenseite jenes Randbereiches 1b.

Insbesondere ist das Reservoir 2 an dem umlaufenden Klemmelement 14 als separates Bauteil festgelegt und umläuft entlang des Klemmelementes 14 offen ringförmig, so dass sich das freie Ende 10 mit der daran festgelegten Bewegungserzeugungsvorrichtung 9 benachbart zur Stirnseite 22 bzw. dem freien Ende 16 des zweiten Abschnitts 5 des Reservoirs 2 angeordnet ist. Hinsichtlich möglicher Verbindungsarten zwischen Reservoir 2 und Klemmelement 14 sei auf die Ausführungen zu Figur 6 verwiesen.

Des Weiteren besteht natürlich auch die Möglichkeit das Reservoir 2 einstückig an das umlaufende Klemmelement 14 anzuformen. Gemäß Figur 6 kann das Reservoir 2 selbst jenes Klemmelement 14 bilden, wobei in diesem Fall die Bolzen 120 direkt an eine dem Randbereich 1b des Gassackes 1 zugewandte Unterseite des Reservoirs 2 festgelegt sind.

Bei den beiden Varianten gemäß Figur 6 und Figur 7 handelt es sich bevorzugt um einen Diffusor 13 bzw. ein Klemmelement 14 für ein Fahrerairbagmodul. Sofern das Reservoir 2 lösbar an dem Flansch 12 des Diffusors 13 bzw. an dem umlaufenden Klemmelement (Klemmring) 14 befestigt ist, besteht mit Vorteil die Möglichkeit, ein herkömmliches Fahrerairbagmodul mit einem solchen Reservoir 2 eines erfindungsgemäßen Airbagmoduls nachzurüsten.

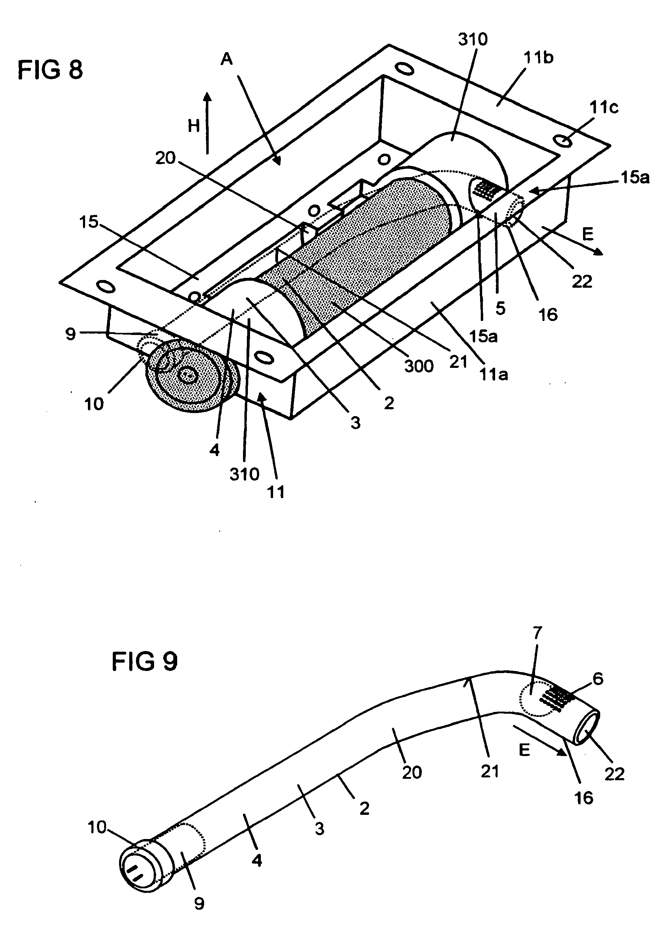

Figur 8 zeigt im Zusammenhang mit Figur 9 eine schematische, perspektivische Ansicht eines Airbagmoduls in Form eines Beifahrerairbagmoduls, mit einem rechteckförmigen Modulgehäuse 11, das eine Aufnahme A für einen gefalteten (nicht aufgeblasenen) Gassack 1 bildet (in der Figur 8 nicht dargestellt), wobei jenes Modulgehäuse 11 einen flächigen Boden 15 aufweist, welcher der Klemmung eines eine Einströmöffnung 1 a des Gassackes 1 berandenden Randbereichs 1b dient. Dies kann mit einem im Zusammenhang mit der Beschreibung der Figur 7 erwähnten Klemmelement erfolgen, welches entsprechend angepasst wurde. Von dem Boden 15 steht entlang einer Hauptentfaltungsrichtung H, entlang der sich der in der Aufnahme A angeordnete Gassack in Richtung auf den zu schützenden Beifahrer bzw. Insassen hin entfaltet, eine quer zur Hauptentfaltungsrichtung H umlaufende Wandung 11a ab, mit einem davon quer zur Hauptentfaltungsrichtung H abgehenden Randbereich 11 b, über den das Modulgehäuse 11 an einem Kraftfahrzeugteil festgelegt werden kann. Hierzu sind an dem besagten Randbereich 11 b des Modulgehäuses 11 Durchgangsöffnungen 11 c vorgesehen, die von geeigneten Befestigungsmitteln, beispielsweise Schrauben, durchgriffen werden können. Bei dem erwähnten Kraftfahrzeugteil kann es sich insbesondere um eine Instrumententafel eines Kraftfahrzeuges handeln.

Der Boden 15 des Modulgehäuses 11 weist eine wannenförmige Vertiefung 20 auf, in der ein Gasgenerator 300 anordenbar ist, der zum Aufblasen des in der Aufnahme A anzuordnenden Gassackes 1 dient. Beidseitig der wannenförmigen Vertiefung 20 sind tonnenförmige Erhebungen 310 angeordnet, welche teilweise den Gasgenerator 300 in Hauptentfaltungsrichtung H umgeben, d.h., quer zur Hauptentfaltungsrichtung H abschnittsweise umlaufen, und von einem Teil des die Einströmöffnung 1a des Gassackes 1 berandenden Randbereichs 1b übergriffen werden. Zum Kühlen der in diesen Gassack 1 eingeleiteten Gase ist ein in einem Reservoir 2 gespeichertes Kühlmittel 3 vorgesehen, wobei jenes Reservoir 2 nach Art der Figur 1 einen ersten Abschnitt 4 und einen zweiten Abschnitt 5 aufweist, wobei das besagte Kühlmittel 3 im ersten Abschnitt 4 und die mindestens eine Ausströmöffnung 6 zum Ausströmen des Kühlmittels 3 im zweiten Abschnitt 5 des Reservoirs 2 vorgesehen sind. Jene beiden Abschnitte 4, 5 sind dabei nach Art der Figur 1 durch ein Verschlusselement 7 abdichtend voneinander getrennt, wobei jenes Verschlusselement 7 auf die bereits beschriebene Art und Weise mittels einer Bewegungserzeugungsvorrichtung 9, die an einem freien Ende 10 des ersten Abschnittes 4 des Reservoirs 2 vorgesehen ist, entlang einer Bewegungsrichtung E an den Ausströmöffnungen 6 vorbei in eine Endposition bewegt werden kann, in der das Verschlusselement 7 gemäß Figur 3 an einem freien Ende 16 des zweiten Abschnittes bzw. einer an dieser Position ausgebildeten Stirnseite 22 des Reservoirs 2 angeordnet ist.

Gemäß Figur 9 weist dieses Reservoir 2 eine Krümmung auf, so dass der zweite Abschnitt 5, an dem die besagten Ausströmöffnungen 6 ausgebildet sind, im Wesentlichen quer zum ersten Abschnitt 4 des Reservoirs 2 verläuft, in dem das Kühlmittel 3 gespeichert wird. Dabei steht gemäß Figur 8 der zweite Abschnitt 5 mit seinen Ausströmöffnungen 6 so durch eine in einer tonnenförmigen Erhebung 310 vorgesehene Durchgangsöffnung 15a in die durch das Modulgehäuse 11 begrenzte Aufnahme A hinein, dass die Ausströmöffnungen 6 entlang der Hauptentfaltungsrichtung H einer Einströmöffnung des in der Aufnahme A anzuordnenden Gassackes zugewandt ist. Somit kann durch die Ausströmöffnungen 6 freigesetztes Kühlmittel 3 wie vorstehend beschrieben direkt in einen Innenraum des besagten Gassackes freigesetzt werden.

Zum elektrischen Kontaktieren der Bewegungserzeugungsvorrichtung 9 steht das freie Ende 10 des ersten Abschnitts 4 des Reservoirs 2, an dem die Bewegungsvorrichtung 9 vorzugsweise festgelegt ist, ebenfalls aus dem Modulgehäuse 11 heraus.

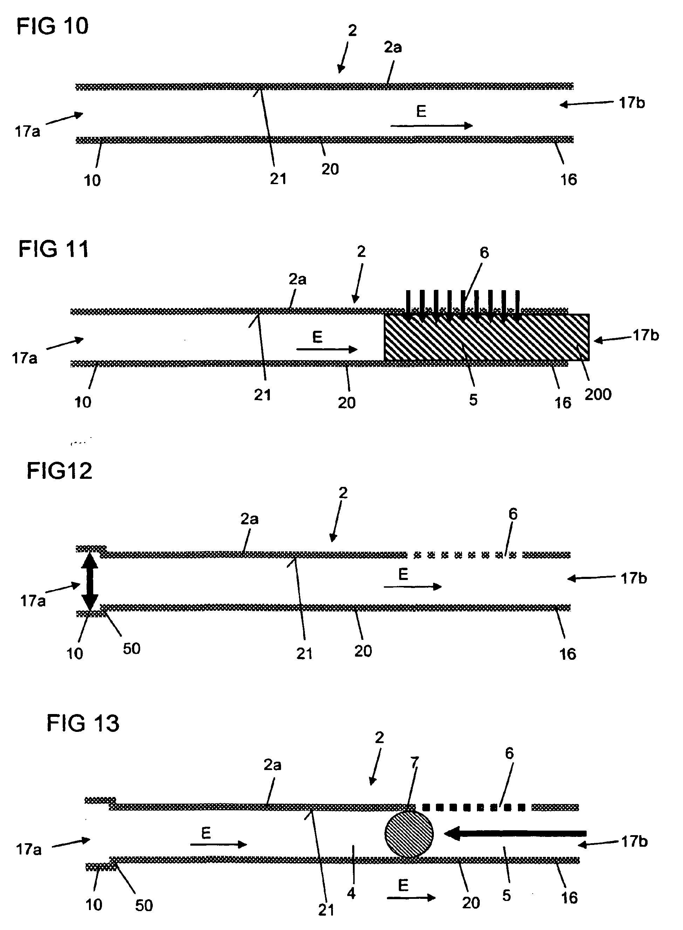

Figur 10 zeigt im Zusammenhang mit den Figuren 11 bis 17 anhand schematischer Schnittdarstellungen die Herstellung eines Reservoirs 2 nach Art der Figur 1. Die Herstellung der anderen Varianten des Reservoirs 2 verläuft in analoger Weise.

Zunächst wird als Ausgangsstück des Reservoirs 2 ein entlang der späteren Bewegungsrichtung E längs erstrecktes Rohr 2a in einer bestimmten Länge und Krümmung (bedarfsweise) bereitgestellt, wobei jenes Rohr 2a eine entlang der späteren Bewegungsrichtung E längs erstreckte Wandung 20 aufweist, die quer zu jener Bewegungsrichtung E umläuft (die Bewegungsrichtung E fällt also mit der Erstreckungsrichtung des Rohres 2a bzw. des Reservoirs 2 zusammen). Je nach der Geometrie des Verschlusselementes 7 weist diese Wandung 20 in einer quer zur Bewegungsrichtung E verlaufenden Querschnittsebene entsprechende Abmessungen auf. Das besagte Rohr 2a weist zwei freie Enden 10, 16 auf, die einander entlang der Bewegungsrichtung E gegenüberliegen und jeweils eine Öffnung 17a, 17b begrenzen.

Nach Bereitstellung jenes Rohres 2a wird gemäß Figur 11 an einem zweiten Abschnitt 5 des Rohres 2a, der das freien Ende 16 des Rohres 2a umfasst, eine Mehrzahl an Ausströmöffnungen 6 ausgebildet. Diese können in das Rohr 2a eingestanzt werden, wozu durch die am freien Ende 16 des zweiten Abschnitts 5 ausgebildete Öffnung 17b ein Widerlagerelement 200 formschlüssig in das Rohr 2a eingeführt wird (entgegen der Bewegungsrichtung E), so dass das Rohr 2a keine Eindrückung erfährt, wenn die Ausströmöffnungen 6 in den zweiten Abschnitt 5 des Rohres 2a eingestanzt werden.

Hiernach wird gemäß Figur 12 an einem weiteren freien Ende 10 eines mit dem zweiten Abschnitt 5 verbundenen ersten Abschnitts 4 des Rohres 2a, das den Ausströmöffnungen 6 bzw. dem freien Ende 16 des zweiten Abschnitts 5 des Rohres 2a entlang der Bewegungsrichtung E gegenüberliegt, eine Aufweitung ausgebildet, so dass jenes freie Ende 10 eine Stufe 50 erhält, die quer zur Bewegungsrichtung E umläuft und sich dabei flächig ringförmig entlang einer quer zur Bewegungsrichtung E verlaufenden Ebene erstreckt.

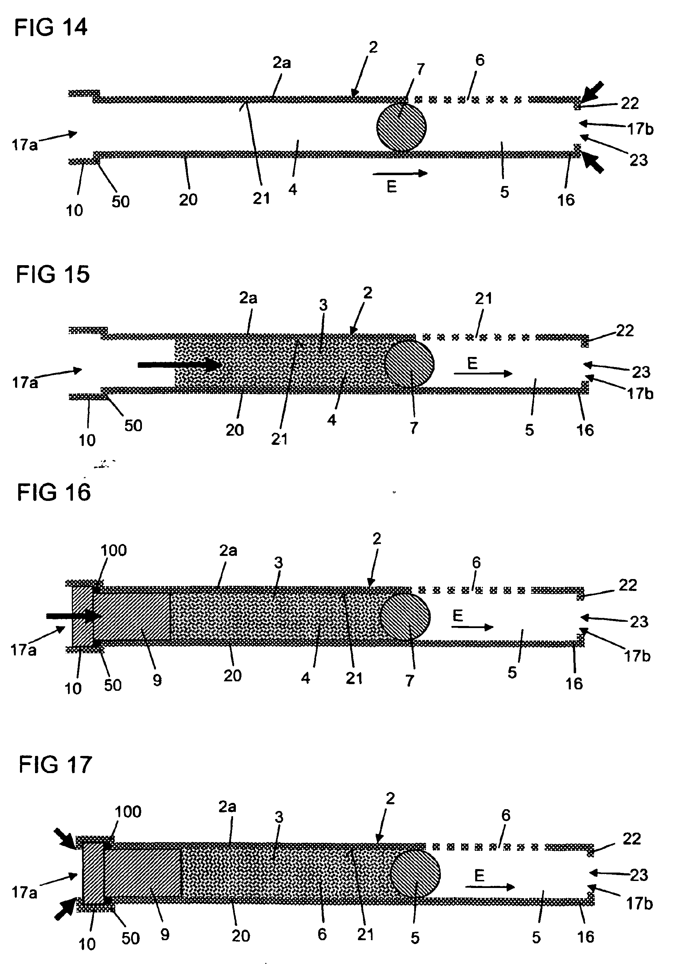

Sodann wird gemäß Figur 13 entgegen der Bewegungsrichtung E ein Verschlusselement 7 in Form einer Kugel (andere Formen sind ebenfalls möglich) durch die Öffnung 17b des freien Endes 16 des zweiten Abschnitts 5 des Rohres 2a in das Rohr 2a eingebracht (eingepresst), und zwar in eine Anfangsposition, in der das Verschlusselement 7 den zweiten Abschnitt 5 von dem ersten Abschnitt 4 des Rohres 2a abdichtend abteilt. Hiernach wird gemäß Figur 14 das freie Ende 16 des zweiten Abschnitts 5 verengt, und zwar durch Abkanten (Umbördeln) des besagten freien Endes.

Gemäß Figur 15 wird anschließend durch die Öffnung 17a des freien Endes 10 des ersten Abschnitts 4 des Reservoirs 2 Kühlmittel 3 in das Reservoir 2 eingefüllt, und hiernach gemäß Figur 16 entlang der späteren Bewegungsrichtung E eine Bewegungserzeugungsvorrichtung 9 eingeführt, die einen verbreiterten Endbereich aufweist, der sich über eine entlang der Stufe 50 ringförmig umlaufende Dichtung 100 entlang der Bewegungsrichtung E an der besagten Stufe 50 abstützt. Hierbei weist jene Dichtung 100 eine Seite auf, über die die Dichtung 100 an der umlaufenden Stufe 50 anliegt sowie eine dieser umlaufenden Seite abgewandte Seite, über die die Dichtung 100 an dem verbreiterten Bereich der Bewegungserzeugungsvorrichtung 9 anliegt. Um die Bewegungserzeugungsvorrichtung 9 im freien Ende 10 des ersten Abschnitts 4 des Reservoirs 2 festzulegen und dabei gleichzeitig gegen die Dichtung 100 vorzuspannen, wird das freie Ende 10 mit dem verbreiterten Bereich der Bewegungserzeugungsvorrichtung 9 verklemmt (durch Umbördeln/Verkrimpen), so dass ein umlaufender Rand des freien Endes 10 den verbreiterten Bereich der Bewegungserzeugungsvorrichtung 9 hintergreift, so dass die Bewegungserzeugungsvorrichtung 9 entgegen und entlang der Bewegungsrichtung E des Verschlusselementes 7 im freien Ende 10 des ersten Abschnittes 4 des Reservoirs (Rohrs) 2a gehalten wird (vgl. Figur 17).

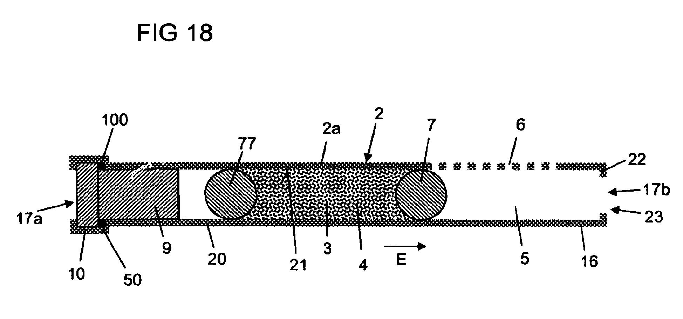

Figur 18 zeigt anhand einer schematischen Schnittdarstellung eine Abwandlung des in der Figur 1 gezeigten Reservoirs 2 eines erfindungsgemäßen Airbagmoduls, bei dem im Unterschied zur Figur 1 ein weiteres Verschlussmittel 77 in Form einer Kugel vorgesehen ist (das weitere Verschlussmittel 77 kann auch eine der anderen vorstehend beschriebenen Formen und Eigenschaften aufweisen).

Das weitere Verschlussmittel 77 ist dabei so im ersten Abschnitt 4 des Reservoirs 2 angeordnet, dass das Kühlmittel 3 entlang der Bewegungsrichtung E zwischen den beiden Verschlussmitteln 7, 77 eingeschlossen ist.

Insbesondere ist das weitere Verschlussmittel 77 somit entlang der Bewegungsrichtung E zwischen der Bewegungserzeugungsvorrichtung 9 und dem Kühlmittel 3 angeordnet und fungiert daher als ein Kolben zum Herausdrücken des Kühlmittels 3 aus dem Reservoir 2.

Beaufschlagt nämlich die Bewegungserzeugungsvorrichtung 9 das weitere Verschlussmittel 77 mit einem Druck, wird das weitere Verschlussmittel 77 in Richtung auf die Ausströmöffnungen 6 aus seiner Anfangsposition herausgedrückt, wobei es das Kühlmittel 3 mitnimmt, das seinerseits das eine Verschlussmittel 7 mitnimmt und an den Ausströmöffnungen 6 vorbeibewegt, so dass es zur Anlage an die Stirnseite 22 des Reservoirs 2 gelangt. Nunmehr drückt das druckbeaufschlagte weitere Verschlusselement 77 das Kühlmittel durch die Ausströmöffnungen 6 aus dem Reservoir 2 heraus.

Das benachbart zum freien Ende 10 des ersten Abschnittes 4 angeordnete Verschlusselement 77 hat neben der Abdichtung bei Aktivierung der Kühlvorrichtung 2, 3, 9, 7, 77 die Funktion eines Kolbens, welcher das Kühlmittel 3 aus den Ausströmöffnungen 6 des Reservoirs 2 herausdrückt. Das zusätzliche Verschlusselement 77 trennt somit bei der Zündung der Bewegungserzeugungsvorrichtung 9 (Gasgenerator) die entstehenden Gase vom Kühlmittel 3, welches so bei Freisetzung unmittelbar seine Kühlwirkung entfalten kann, was sich in erheblich kürzeren Zeiten bis zu einem bestimmten Druckabfall im Gassack bemerkbar macht. Ohne dieses weitere Verschlusselement 77 findet eine den Druckabfall verzögernde Durchmischung der Gase der Bewegungserzeugungsvorrichtung 9 mit dem Kühlmittel 3 statt.

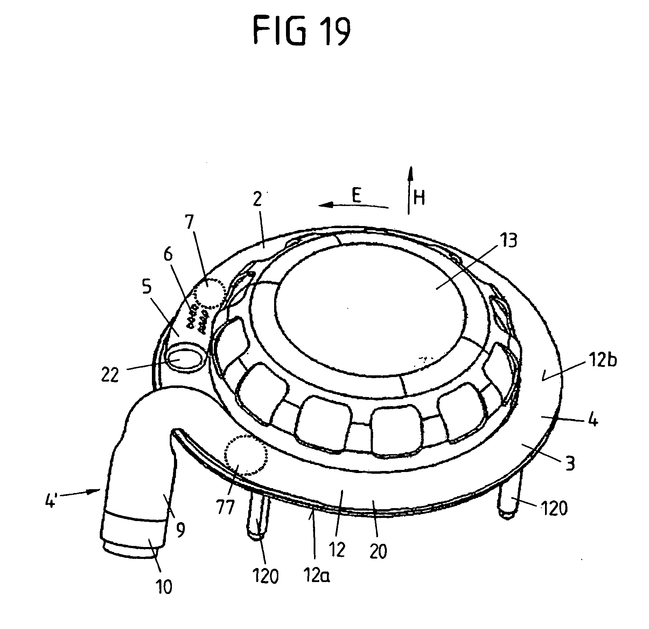

Schließlich zeigt Figur 19 eine Abwandlung des in der Figur 6 gezeigten Airbagmoduls, wobei im Unterschied zur Figur 6 das Reservoir 2 eine Krümmung (Abwinklung) im ersten Abschnitt 4 aufweist, so dass ein Abschnitt 4' des Reservoirs 2, der das freie Ende 10 des ersten Abschnitts 4 des Reservoirs 2 und die Bewegungserzeugungsvorrichtung 9 umfasst, aus dem Gassack 1 herausragt. Die Krümmung ist so ausgebildet, dass der Abschnitt 4' des Reservoirs 2 parallel zu den Bolzen 120 verläuft bzw. senkrecht zur Unterseite 12a des Flansches 12. Oder anders gesagt, der besagte Abschnitt 4' des Reservoirs 2 erstreckt sich entlang der Hauptentfaltungsrichtung H.

Das Reservoir 2 ist im Unterschied zur Figur 6 gemäß Figur 18 aufgebaut, d.h., das Kühlmittel 3 ist, wie oben dargelegt, zwischen den Verschlussmitteln 7, 77 eingeschlossen. Im Unterschied zur Figur 18 ist das Reservoir 2 gemäß Figur 19 gekrümmt und erstreckt sich (umläuft) entlang des Flansches 12, wobei sich der zweite Abschnitt 5 entlang des Flansches 12 erstreckt. Ebenfalls erstreckt sich derjenige Teil des ersten Abschnittes 4, der das Kühlmittel 3 enthält - dieses ist zwischen den Verschlusselementen 7, 77 eingesperrt - entlang des Flansches 12. Hiervon geht der besagte Abschnitt 4' ab, der aus dem Gassack 1 herausragt.

Der Gassack 1 ist in der Fig. 19 nicht dargestellt. Hierzu wird auf die Figur 6 verwiesen.

## Patentansprüche

1. Airbagmodul für ein Kraftfahrzeug, mit
- einem Gassack (1), der durch Einleiten von Gas in den Gassack (1) zum Schutz einer Person aufblasbar ist,
- einem öffenbaren Reservoir (2) zum Speichern eines Kühlmittels (3), wobei das Reservoir (2) einen ersten und einen damit verbundenen zweiten Abschnitt (4, 5) aufweist,
- zumindest einer im zweiten Abschnitt (5) ausgebildeten Ausströmöffnung (6) des Reservoirs (2), durch die hindurch das Kühlmittel (3) zum Kühlen in den Gassack (1) eingeleiteter Gase aus dem Reservoir (2) austreten kann, und
- einem Verschlusselement (7) zum Verschließen der Ausströmöffnung (6),
**dadurch gekennzeichnet,**
**dass** das Verschlusselement (7) das Reservoir (2) in die beiden Abschnitte (4, 5) unterteilt, und dass das Kühlmittel (3) im ersten Abschnitt (4) angeordnet ist, wobei das Verschlusselement (7) den ersten Abschnitt (4) des Reservoirs (2) gegenüber dem zweiten Abschnitt (5) des Reservoirs (2) abdichtet.

2. Airbagmodul nach Anspruch 1, **dadurch gekennzeichnet, dass** das Verschlusselement (7) zum Öffnen der Ausströmöffnung (6) im Reservoir (2) bewegbar ist und auch im geöffneten Zustand der Ausströmöffnung (6) im Reservoir (2) angeordnet ist.

3. Airbagmodul nach einem der vorhergehenden Ansprüche, **dadurch gekennzeichnet, dass** das Verschlusselement (7) entlang einer Bewegungsrichtung (E) aus einer Anfangsposition, in der das Verschlusselement (7) das Reservoir (2) in die beiden Abschnitte (4, 5) unterteilt, in eine Endposition bewegbar ist, in der das Kühlmittel (3) aus dem ersten Abschnitt (4) über den zweiten Abschnitt (5) durch die mindestens eine Ausströmöffnung (6) hindurch aus dem Reservoir (2) austreten kann.

4. Airbagmodul nach Anspruch 3, **dadurch gekennzeichnet, dass** das Reservoir (2) eine entlang der Bewegungsrichtung (E) längs erstreckte Wandung (20) aufweist, die quer zur Bewegungsrichtung (E) umläuft, wobei jene Wandung (20) insbesondere zumindest abschnittsweise hohlzylinderförmig ausgebildet ist.

5. Airbagmodul nach den Ansprüchen 3 und 4, **dadurch gekennzeichnet, dass** die Ausströmöffnung (6) an der Wandung (20) ausgebildet ist, so dass das Kühlmittel (3) durch jene Ausströmöffnung (6) quer zur Bewegungsrichtung (E) aus dem Reservoir (2) ausgestoßen wird.

6. Airbagmodul nach einem der vorhergehenden Ansprüche, **dadurch gekennzeichnet, dass** das Verschlusselement (7) deformierbar, insbesondere elastisch deformierbar ausgebildet ist.

7. Airbagmodul nach Anspruch 3 oder einem der Ansprüche 4 bis 6 soweit rückbezogen auf Anspruch 3, **gekennzeichnet durch** eine Bewegungserzeugungsvorrichtung (9), die dazu eingerichtet und vorgesehen ist, das Kühlmittel (3) mit einem Druck zu beaufschlagen, so dass das Kühlmittel (3) das Verschlusselement (7) aus der Anfangsposition in die Endposition drückt.

8. Airbagmodul nach Anspruch 7, **dadurch gekennzeichnet, dass** die Bewegungserzeugungsvorrichtung (9) durch einen Gasgenerator gebildet ist, der insbesondere mit einem freien Ende (10) des ersten Abschnitts (4) des Reservoirs (2) verkrimpt ist.

9. Airbagmodul nach einem der Ansprüche 1 bis 8, **dadurch gekennzeichnet, dass** ein weiteres Verschlussmittel (77) vorgesehen ist, das aus einer Anfangsposition, in der das weitere Verschlusselement (77) so angeordnet ist, dass das Kühlmittel (3) zwischen den beiden Verschlussmitteln (7, 77) eingeschlossen ist, in eine Endposition bewegbar ist, wobei das weitere Verschlussmittel (77) bei seiner Bewegung in seine Endposition das Kühlmittel (3) und das eine Verschlussmittel (7) zum Freisetzen des Kühlmittels (3) mitnimmt.

10. Airbagmodul nach den Ansprüchen 3, 7 und 9, **dadurch gekennzeichnet, dass** die Bewegungserzeugungsvorrichtung (9) dazu eingerichtet und vorgesehen ist, das Kühlmittel (3) über das weitere Verschlussmittel (77) mit einem Druck zu beaufschlagen, so dass das weitere Verschlussmittel (77) das Kühlmittel (31) aus dem Reservoir (2) herausdrückt und dabei das eine Verschlusselement (7) aus seiner Anfangsposition in seine Endposition drückt.

11. Verfahren zur Herstellung eines Airbagmoduls, insbesondere nach einem der Ansprüche 1 bis 10, umfassend die Schritte:
- Bereitstellen eines entlang einer Erstreckungsrichtung (E) längs erstreckten Rohres (2a), das entlang der Erstreckungsrichtung (E) in einem ersten und einen zweiten Abschnitt (4, 5) unterteilt ist,
- Ausbilden zumindest einer Ausströmöffnung (6) lediglich am zweiten Abschnitt (5), und
- Einführen eines Verschlusselementes (7) in das Rohr (2a), so dass das Verschlusselement (7) das Rohr (2a) in den ersten und den zweiten Abschnitt (4, 5) unterteilt, wobei
- in den ersten Abschnitt (4) ein Kühlmittel (3) eingefüllt wird, insbesondere durch eine Öffnung (17a) des ersten Abschnittes (4), die durch das freie Ende (10) des ersten Abschnittes (4) berandet wird.

12. Verfahren nach Anspruch 11, **dadurch gekennzeichnet, dass** als Verschlusselement (7) eine deformierbares, insbesondere elastisch deformierbares Element in das Rohr (2a) eingeführt wird, das den ersten Abschnitt (4) gegenüber dem zweiten Abschnitt (5) abdichtet, so dass im ersten Abschnitt (4) befindliches Kühlmittel (3) nicht aus der mindestens einen, am zweiten Abschnitt (5) ausgebildeten Ausströmöffnung (6) austreten kann.

13. Verfahren nach einem der Ansprüche 11 bis 12, **dadurch gekennzeichnet, dass** ein freies Ende (16) des zweiten Abschnittes (5), das entlang der Erstreckungsrichtung (E) dem freien Ende (10) des ersten Abschnittes (4) gegenüberliegt, verengt wird, um zu verhindern, dass das Verschlusselement (7) entlang der Erstreckungsrichtung (E) aus dem Rohr (2a) herausgedrückt werden kann.

14. Verfahren nach einem der Ansprüche 11 bis 13, **dadurch gekennzeichnet, dass** in den ersten Abschnitt (4) ein weiteres Verschlussmittel (77) eingeführt wird, insbesondere durch eine Öffnung (17a) des ersten Abschnittes (4), die durch das freie Ende (10) des ersten Abschnittes (4) berandet wird, so dass die beiden Verschlussmittel (7, 77) das Kühlmittel (3) einschließen.

15. Verfahren nach einem der Ansprüche 13 bis 14, **dadurch gekennzeichnet, dass** die Bewegungserzeugungsvorrichtung (9) in den ersten Abschnitt (4) des Rohres (2a) eingeführt wird, insbesondere durch jene Öffnung (17a) des ersten Abschnittes (4), wobei insbesondere die Bewegungserzeugungsvorrichtung (9) nach dem Einführen in den ersten Abschnitt (4) an diesem festgelegt wird.

## Claims

1. Airbag module for a motor vehicle, comprising
- a gas sack (1), that can be inflated in order to protect a person by feeding gas into the gas sack (1),
- an openable reservoir (2) for storing a coolant (3), wherein the reservoir (2) comprises a first and a second portion (4,5), the second portion (5) connected to the first portion (4),
- at least one outflow opening (6) of the reservoir (2) formed in the second portion (5), through which the coolant (3), for cooling the gas fed into the gas sack (1), can leave the reservoir (2), and
- a closure element (7) for closing the outflow opening (6),
**characterized in that**
the closure element (7) divides the reservoir (2) into the two portions (4, 5), and **in that** the coolant (3) is arranged in the first portion (4), wherein the closure element (7) seals the first portion (4) of the reservoir (2) with respect to the second portion (5) of the reservoir (2).

2. Airbag module according to claim 1, **characterized in that** the closure element (7) is movable in the reservoir (2) in order to open the outflow opening (6) and is also arranged in the reservoir (2) in the opened state of the outflow opening (6).

3. Airbag module according to one of the preceding claims, **characterized in that** the closure element (7) can be moved along a movement direction (E) out of an initial position in which the closure element (7) divides the reservoir (2) into the two portions (4, 5) into a final position in which the coolant (3) can leave the reservoir (2) from the first section (4) via the second section (5) through the at least one outflow opening (6).

4. Airbag module according to claim 3, **characterized in that** the reservoir (2) comprises a wall (20) extending longitudinally along the movement direction (E), that circulates across the movement direction (E), wherein said wall (20) is particularly formed hollow-cylindrical at least in sections.

5. Airbag module according to claims 3 and 4, **characterized in that** the outflow opening (6) is formed at the wall (20), so that the coolant (3) is discharged out of the reservoir (2) through said outflow opening (6) across the movement direction (E).

6. Airbag module according to one of the preceding claims, **characterized in that** the closure element (7) is formed deformable, particularly elastically deformable.

7. Airbag module according to claim 3 or one of the claims 4 to 6 where referred back to claim 3, **characterized by** a movement generating device (9) that is configured and provided to act on the coolant (3) with a pressure, so that the coolant (3) presses the closure element (7) out of the initial position into the final position.

8. Airbag module according to claim 7, **characterized in that** the movement generating device (9) is formed by a gas generator that is particularly crimped with a free end (10) of the first portion (4) of the reservoir (2).

9. Airbag module according to one of the claims 1 to 8, **characterized in that** a further closure element (77) is provided that can be moved out of an initial position, in which the further closure element (77) is arranged such that the coolant (3) is enclosed between the two closure means (7, 77), into in a final position, wherein the further closure means (77), upon its movement into its final position, takes along the coolant (3) and the one closure means (7) in order to set free the coolant (3).

10. Airbag module according to the claims 3, 7 and 9, **characterized in that** the movement generating device (9) is configured and provided to act on the coolant (3) with a pressure via the further closure means (77), so that the further closure means (77) presses the coolant (31) out of the reservoir (2) and thereby presses the one closure element (7) out of its initial position into its final position.

11. Method for producing an airbag module, particularly according to one of the claims 1 to 10, comprising the steps of:
- Providing a tube (2a) extending longitudinally along an extension direction (E), that is divided into a first and a second portion (4, 5) along the extension direction (E),
- Forming at least one outflow opening (6) merely at the second portion (5), and
- Inserting a closure element (7) into the tube (2a), so that the closure element (7) divides the tube (2a) into the first and the second portion (4, 5), wherein
- a coolant (3) is filled in the first section (4), particularly through an opening (17a) of the first portion (4), which is delimited by the free end (10) of the first portion (4).

12. Method according to claim 11, **characterized in that** as the closure element (7) a deformable, particularly elastically deformable element is inserted into the tube (2a), that seals the first portion (4) with respect to the second portion (5), so that coolant (3) residing in the first portion (4) cannot escape through the at least one outflow opening (6) formed at the second portion (5).

13. Method according to one of the claims 11 to 12, **characterized in that** a free end (16) of the second portion (5) that faces the free end (10) of the first portion (4) along the extension direction (E), is narrowed, in order to avoid that the closure element (7) can be pressed out of the tube (2a) along the extension direction (E).

14. Method according to one of the claims 11 to 13, **characterized in that** a further closure means (77) is inserted into the first portion (4), particularly through an opening (17a) of the first portion (4), which is delimited by the free end (10) of the first portion (4), so that the two closure means (7, 77) enclose the coolant (3).

15. Method according to one of the claims 13 to 14, **characterized in that** the movement generating device (9) is inserted into the first portion (4) of the tube (2a), particularly through said opening (17a) of the first portion (4), wherein particularly the movement generating device (9) is fastened to said first portion (4) after insertion into the first portion (4).

## Revendications

1. Module d'airbag pour un véhicule automobile, comprenant
- un sac à gaz (1), qui est susceptible d'être gonflé par admission de gaz dans le sac à gaz (1) pour la protection d'une personne,
- un réservoir (2) à ouvrir pour stocker un agent de refroidissement (3), le réservoir (2) comprenant un premier tronçon (4) et un second tronçon (5) relié à celui-ci,
- au moins une ouverture d'échappement (6) du réservoir (2) réalisée dans le second tronçon (5) et à travers laquelle l'agent de refroidissement (3) peut sortir hors du réservoir (2) pour refroidir les gaz admis dans le sac à gaz (1), et
- un élément obturateur (7) pour obturer l'ouverture d'échappement (6),
**caractérisé en ce que**
l'élément obturateur (7) subdivise le réservoir (2) dans les deux tronçons (4, 5), et **en ce que** l'agent de refroidissement (3) est agencé dans le premier tronçon (4), l'élément obturateur (7) fermant de façon étanche le premier tronçon (4) du réservoir (2) par rapport au second tronçon (5) du réservoir (2).

2. Module d'airbag selon la revendication 1, **caractérisé en ce que** l'élément obturateur (7) est déplaçable dans le réservoir (2) pour ouvrir l'ouverture d'échappement (6) et est agencé dans le réservoir (2) également dans l'état ouvert de l'ouverture d'échappement (6).

3. Module d'airbag selon l'une des revendications précédentes, **caractérisé en ce que** l'élément obturateur (7) est déplaçable, le long d'une direction de déplacement (E) à partir d'une position initiale dans laquelle l'élément obturateur (7) subdivise le réservoir (2) dans les deux tronçons (4, 5), jusque dans une position finale dans laquelle l'agent de refroidissement (3) peut sortir hors du réservoir (2) en provenant du premier tronçon (4) via le second tronçon (5) et à travers ladite au moins une ouverture d'échappement (6).

4. Module d'airbag selon la revendication 3, **caractérisé en ce que** le réservoir (2) comporte une paroi (20) allongée le long de la direction de déplacement (E), qui décrit une circonférence transversalement à la direction de déplacement (E), ladite paroi (20) étant en particulier réalisée au moins partiellement en forme de cylindre creux.

5. Module d'airbag selon les revendications 3 et 4, **caractérisé en ce que** l'ouverture d'échappement (6) est réalisée sur la paroi (20), de sorte que l'agent de refroidissement (3) est chassé hors du réservoir (2) à travers ladite ouverture d'échappement (6) transversalement à la direction de déplacement (E).

6. Module d'airbag selon l'une des revendications précédentes, **caractérisé en ce que** l'élément obturateur (7) est réalisé pour être déformable, en particulier déformable élastiquement.

7. Module d'airbag selon la revendication 3 ou selon l'une des revendications 4 à 6 prises en dépendance de la revendication 3, **caractérisé par** un dispositif de génération de mouvement (9) qui est conçu et prévu pour mettre l'agent de refroidissement (3) sous pression, de sorte que l'agent de refroidissement (3) pousse l'élément obturateur (7) hors de la position initiale jusque dans la position finale.

8. Module d'airbag selon la revendication 7, **caractérisé en ce que** le dispositif de génération de mouvement (9) est formé par un générateur de gaz qui est serti en particulier avec une extrémité libre (10) du premier tronçon (4) du réservoir (2).

9. Module d'airbag selon l'une des revendications 1 à 8, **caractérisé en ce qu'**il est prévu un autre élément obturateur (77), qui est déplaçable à partir d'une position initiale dans laquelle l'autre élément obturateur (77) est agencé de telle façon que l'agent de refroidissement (3) soit enfermé entre les deux éléments obturateurs (7, 77), jusque dans une position finale, tel que l'autre élément obturateur (77) entraîne, lors de son déplacement vers sa position finale, l'agent de refroidissement (3) et le premier élément obturateur (7) pour libérer l'agent de refroidissement (3).

10. Module d'airbag selon les revendications 3, 7 et 9, **caractérisé en ce que** le dispositif de génération de mouvement (9) est conçu et prévu pour mettre l'agent de refroidissement (3) sous pression via l'autre élément obturateur (77), de sorte que l'autre élément obturateur (77) force l'agent de refroidissement (31) hors du réservoir (2) et pousse ici le premier élément obturateur (7) hors de sa position initiale jusque dans sa position finale.

11. Procédé pour fabriquer un module d'airbag, en particulier selon l'une des revendications 1 à 10, comprenant les étapes suivantes :
- préparation d'un tube (2a), s'étendant le long d'une direction d'extension (E), qui est subdivisé le long de la direction d'extension (E) en un premier tronçon et en un second tronçon (4, 5),
- réalisation d'au moins une ouverture d'échappement (6) seulement sur le second tronçon (5), et
- introduction d'un élément obturateur (7) dans le tube (2a), de sorte que l'élément obturateur (7) subdivise le tube (2a) dans le premier et le second tronçon (4, 5), et
- on remplit un agent de refroidissement (3) dans le premier tronçon (4), en particulier à travers une ouverture (17a) du premier tronçon (4), laquelle est bordée par l'extrémité libre (10) du premier tronçon (4).

12. Procédé selon la revendication 11, **caractérisée en ce qu'**un élément déformable, en particulier déformable élastiquement, est introduit dans le tube (2a) à titre d'élément obturateur (7) qui ferme de façon étanche le premier tronçon (4) vis-à-vis du second tronçon (5), de sorte que l'agent de refroidissement (7) qui se trouve dans le premier tronçon (4) ne puisse pas sortir hors de ladite au moins une ouverture d'échappement (6) réalisée sur le second tronçon (5).

13. Procédé selon l'une des revendications 11 et 12, **caractérisé en ce qu'**une extrémité libre (16) du second tronçon (5), qui est située à l'opposé, le long de la direction d'extension (E), de l'extrémité libre (10) du premier tronçon (4), est rétrécie pour empêcher que l'élément obturateur (7) puisse être forcé hors du tube (2a) le long de la direction d'extension (E).

14. Procédé selon l'une des revendications 11 à 13, **caractérisé en ce qu'**un autre élément obturateur (77) est introduit dans le premier tronçon (4), en particulier à travers une ouverture (17a) du premier tronçon (4) qui est bordée par l'extrémité libre (10) du premier tronçon (4), de sorte que les deux éléments obturateurs (7, 77) enferment l'agent de refroidissement (3).

15. Procédé selon l'une des revendications 13 et 14, **caractérisé en ce que** le dispositif de génération de mouvement (9) est introduit dans le premier tronçon (4) du tube (2a), en particulier à travers ladite ouverture (19a) du premier tronçon (4) et, après l'introduction dans le premier tronçon (4), le dispositif de génération de mouvement (9) est en particulier immobilisé sur celui-ci.
